# EUROPEAN PATENT SPECIFICATION

(11) **EP 1 717 826 B1**
(45) Date of publication and mention of the grant of the patent: **29.09.2010**
(21) Application number: 06008316.9
(22) Date of filing: 21.04.2006
(51) Int. Cl.: H01F 38/42, H01F 27/32

(54) **Transformer**
Transformator
Transformateur

(30) Priority: 28.04.2005 JP 2005133120
(43) Date of publication of application: 02.11.2006
(73) Proprietor: Panasonic Electric Works Co., Ltd., Kadoma-shi Osaka (JP)
(72) Inventor: Kitamura, Hiroyasu Panasonic Electric Works Co., Ltd., Kadoma-shi Osaka (JP); Yamashita, Mikihiro Panasonic Electric Works Co., Ltd., Osaka (JP)
(74) Representative: Müller-Boré & Partner Patentanwälte

(56) References cited:
- GB-A- 553 596
- GB-A- 1 451 842
- JP-A- 9 017 657
- US-A- 4 159 457

## Description

### Background of the invention

### 1. Field of the invention;

The present invention relates to a transformer which is used for a switching power source in a ringing-choke converter system.

### 2. Description of the related art:

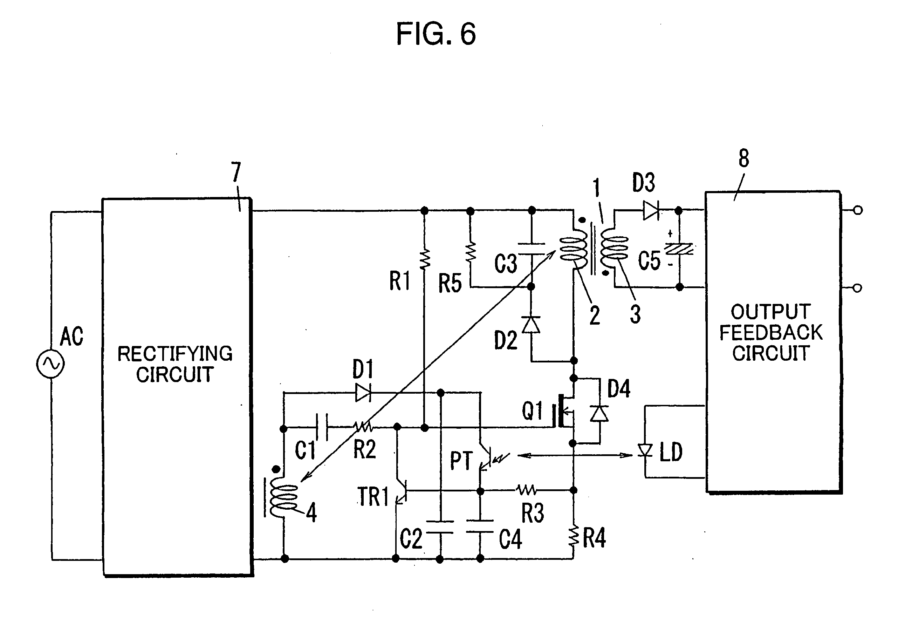

Conventionally, a transformer 1 shown in Fig. 6 is provided which is used for a switching power source of a self-excitation fly-back type called a ringing-choke converter (or RCC) system.

The switching power source of Fig. 6 will be described in detail. This switching power source includes the transformer 1 which has: a rectifying circuit 7 for rectifying an output of an AC power source; a primary winding 2 connected via the series circuit of a switching element Q1 formed by an FET and a resistor R4 between the output ends of the rectifying circuit 7; a secondary winding 3 connected via a diode D3 between the output ends; and a feedback winding 4 one end of which is grounded and the other end is connected via the series circuit of a first capacitor C1 and a resistor R2 to the gate of the switching element Q1. In the transformer 1, a starting resistor R1 is connected between a connection point of the primary winding 2 and the rectifying circuit 7 and a connection point of the resistor R2 and the gate of the switching element Q1. In the switching element Q1, a diode D4 is connected between its source and drain.

An output from the secondary winding 3 is rectified into a half wave by the diode D3. Then, it is smoothed by a smoothing capacitor C5 connected between the output ends and is output. Between both ends of the feedback winding 4, the series circuit of a diode D1 and a second capacitor C2 is connected. In the transformer 1, the series circuit of a diode D2 and a third capacitor C3 is connected between both ends of the primary winding 2. Between both ends of the third capacitor C3, a resistor R5 is connected for discharging the third capacitor C3.

An operation will be described of the above described switching power source. The switching element Q1 remains off immediately after the power supply has been given, so that an electric current does not pass through the primary winding 2 of the transformer 1. Hence, the DC output which has been outputted from the rectifying circuit 7 is inputted through the starting resistor R1 and the resistor R2 in the first capacitor C1. Thereby, the first capacitor C1 is charged in the direction where the electric potential on the side of the switching element Q1 becomes positive. Then, the voltage between both ends of the first capacitor C1 goes up, and soon, the switching element Q1 is turned on. Thus, an electric current is sent to the primary winding 2 of the transformer 1. In the meantime, the diode D3 hinders the current from passing through the secondary winding 3, so that energy is stored in the transformer 1. Next, the second capacitor C2 is charged with an electric current which is induced by the feedback winding 4 of the transformer 1. In the first capacitor C1, the electric potential on the side of the feedback winding 4 rises while the electric potential on the side of the switching element Q1 falls. Before long, the switching element Q1 is turned off. When the switching element Q1 is turned off, the energy stored in the transformer 1 induces an electric current to the secondary winding 3. Using this current, the smoothing capacitor C5 is charged through the diode D3. Thereafter, the first capacitor C1 is charged again in the direction where the electric potential on the side of the switching element Q1 becomes positive. Then, the above described operation is repeated.

The connection point of the gate of the switching element Q1 and the resistor R2 is grounded via a transistor TR1. Between both ends of the second capacitor C2, the series circuit of a photo-TRIAC PT and a fourth capacitor C4 is connected. A light-emitting element LD inside of the photo-TRIAC PT is connected to an output feedback circuit 8 which controls this photo-TRIAC PT so that it is turned on and off. When the photo-TRIAC PT is turned on, the fourth capacitor C4 is charged with an electric current which flows in through the diode D1. Thus, the transistor TR1 is turned on and the switching element Q1 is instantly turned off. The output feedback circuit 8 detects the voltage between both ends of the smoothing capacitor C5, in other words, an output voltage. Then, it controls the photo-TRIAC PT's on and off so that this output voltage can be kept constant. A connection point of the photo-TRIAC PT and the fourth capacitor C4 is grounded via a resistor R3 and the resistor R4. While the photo-TRIAC PT is kept off, the electric charge of the fourth capacitor C4 is discharged via the resistor R3 and the resistor R4.

In this type of transformer 1, a space for storing a magnetic flux while an electric current is passing through the primary winding 2 is formed in a core. This can easily make a leakage inductance larger. Hence, in order to reduce electro-magnetic noise, it is especially important to lower the leakage inductance. In terms of how to reduce such a leakage inductance, for example, there is a method in which a shielded body formed by a conductive body and covered with a winding so that its potential can be kept constant is provided in a transformer (e.g., refer to Japanese Unexamined Patent Publication No. 9-17657).

Herein, the above described switching power source is used in relatively small equipment, such as an AC adapter. Since a transformer is used in such a switching power source, its size should also be smaller.

However, if a shielded body is provided in a transformer, then in addition to the shielded body itself, a terminal for the shielded body needs to be provided. This makes the transformer 1 larger.

### Summary of the invention

In view of the above described grounds, it is an object of the present invention to provide a transformer in which leakage inductance and electro-magnetic noise can be reduced.

The above described object can be attained, using a transformer in which: a primary winding, a secondary winding and a feedback winding are wound onto a bobbin so that four winding layers are separately piled in the radius directions of the bobbin's shaft portion; the primary winding is formed by the innermost winding layer and the fourth winding layer from the inside; the secondary winding is formed by the second winding layer from the inside; the feedback winding is formed by the third winding layer from the inside; and the feedback winding is wound with no clearance from a position adjacent to one flange portion of the bobbin to a position adjacent to the other flange portion thereof.

According to this transformer, the feedback winding is wound with no clearance from the position adjacent to one flange portion to the position adjacent to the other flange portion. Therefore, the feedback winding helps decrease leakage inductance and electro-magnetic noise.

These and other objects, features and advantages of the present invention will become more apparent upon reading of the following detailed description along with the accompanied drawings.

### Brief explanation of the drawings

Fig. 1 is a sectional view of a transformer according to an embodiment of the present invention.
Fig. 2 is a schematic view of the transformer of Fig. 1, showing its configuration.
Fig. 3 is a sectional view of a transformer according to another embodiment of the present invention.
Fig. 4 is a sectional view of a transformer according to still another embodiment of the present invention.
Fig. 5 is a sectional view of a transformer according to still another embodiment of the present invention.
Fig. 6 is a circuit diagram, showing an example of the circuit of a switching power source using a ringing-choke converter system.

### Detailed description of the preferred embodiment

Hereinafter, the most desirable embodiments for implementing the present invention will be described with reference to the drawings.

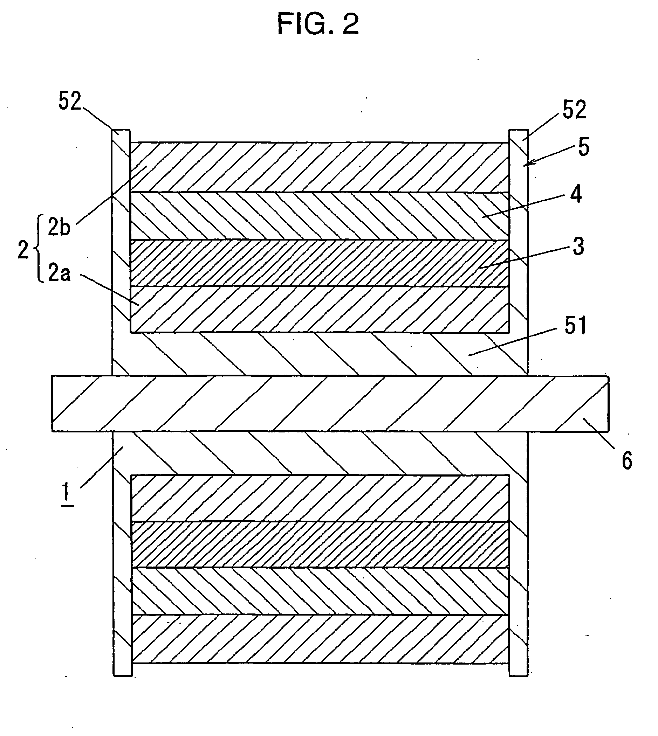

As shown in Fig. 2, a transformer 1 according to this embodiment includes: a bobbin 5 which has a cylindrical shaft portion 51 made of an insulating material and having a uniform external diameter and flange portions 52 each protruding in the radius directions of the shaft portion 51 from both ends of the shaft portion 51; a core 6 which is made of a magnetic body and is inserted through the shaft portion 51 of the bobbin 5; and a primary winding 2, a secondary winding 3 and a feedback winding 4 which are each wound onto the shaft portion 51 between the flange portions 52 of the bobbin 5 to form four separate winding layers piled in the radius directions of the shaft portion 51. The primary winding 2 forms both of the innermost winding layer 2a (hereinafter, referred to as "the first layer") and the fourth winding layer 2b from the inside (hereinafter, referred to as "the fourth layer"). The secondary winding 3 forms the second winding layer from the inside (hereinafter, referred to as "the second layer"). The feedback winding 4 forms the third winding layer from the inside (hereinafter, referred to as "the third layer"). The primary winding 2, the secondary winding 3 and the feedback winding 4 are mutually insulated at distances required by the Japanese regulations concerned, using an interlayer tape (not shown) which is made of an insulating material and is disposed between the windings.

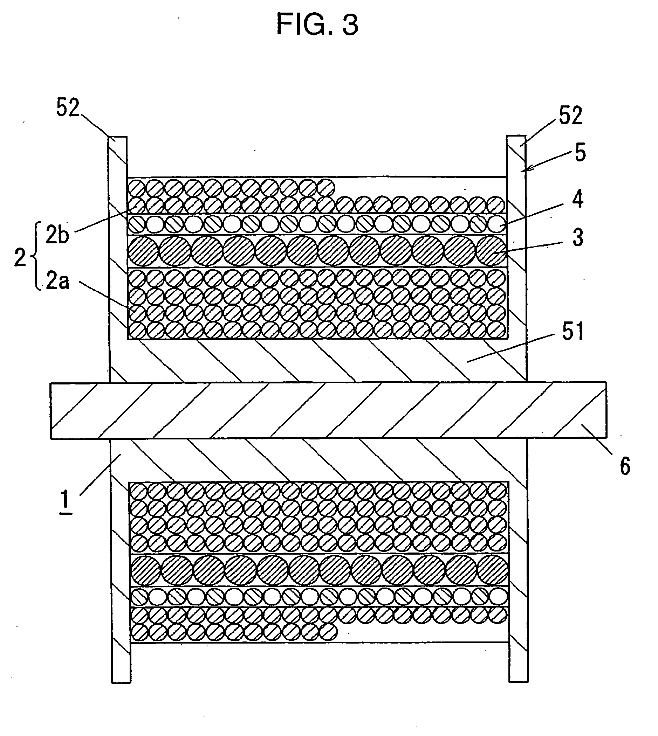

The primary winding 2 is wound into the two winding layers 2a, 2b in such a way that the secondary winding 3 is sandwiched between them. This helps reduce leakage inductance. In the primary winding 2, the number of turns in the first layer is larger than that in the forth layer. According to this configuration, compared with a case where the number of turns in the first layer of the primary winding 2 is smaller than in the forth layer, the mutual inductance of the primary winding 2 and the secondary winding 3 is improved. As shown in Fig. 3, if more turns are provided in the first layer, leakage inductance or electro-magnetic noise increases, but the mutual inductance of the primary winding 2 and the secondary winding 3 is further improved. This makes it possible to restrain the transformer 1 from rising in temperature and enhance its efficiency. Besides, the load given to a circuit component such as the switching element Q1 becomes lighter, so that a circuit component with a lighter rated load can be used.

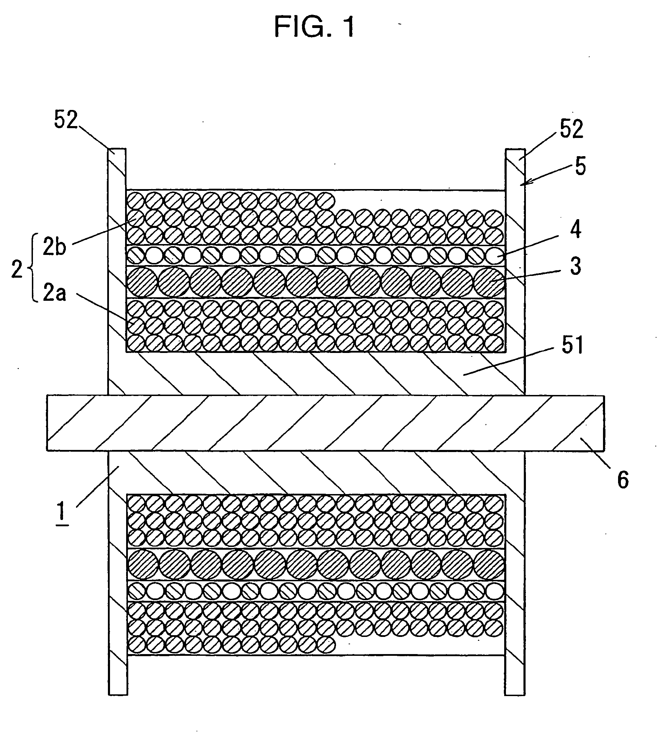

The feedback winding 4 is formed by two electric wires and is wound, as shown in Fig. 1, with no clearance from the position adjacent to one flange portion 52 to the position adjacent to the other flange portion 52. As the feedback winding 4, a fine electric wire is usually used, and in addition, a great number of turns are unnecessary. In general, therefore, it is difficult to wind the feedback winding 4 with no clearance. However, in this embodiment, the feedback winding 4 is formed by the two electric wires, thus making it easy to wind the feedback winding 4 with no clearance.

Herein, in the case where the primary winding 2 is wound to form the two separate winding layers 2a, 2b between which the secondary winding 3 is placed, the two winding layers 2a, 2b frequently have the same number of turns. In this embodiment, however, in the primary winding 2 at the first winding layer 2a, the winding-start position and the winding-end position are both close to the flange portions 52, and it is wound up with no clearance. For example, let's assume that the primary winding 2 needs a turn number of 150. Then, it begins to be wound in a position adjacent to one flange portion 52, and with no clearance, finishes being wound in a position adjacent to the other flange portion 52. If this number of turns is 80, the number of turns in the first layer is set to 80 and the number of turns in the fourth layer is set to 70. In other words, the number of turns in each of the first layer and the fourth layer are not set to 75. According to this configuration, the peripheral surface of the first winding layer 2a becomes flat in the axial directions. Therefore, the feedback winding 4 can be easily wound with no clearance.

According to the above described configuration, the feedback winding 4 is wound up with no clearance, and thereby, the feedback winding 4 offers an effect similar to the prior art's shielded body. This helps reduce leakage inductance and electro-magnetic noise. Besides, different from the prior art, there is no need to add such a shielded body, thus preventing the transformer 1 from becoming larger.

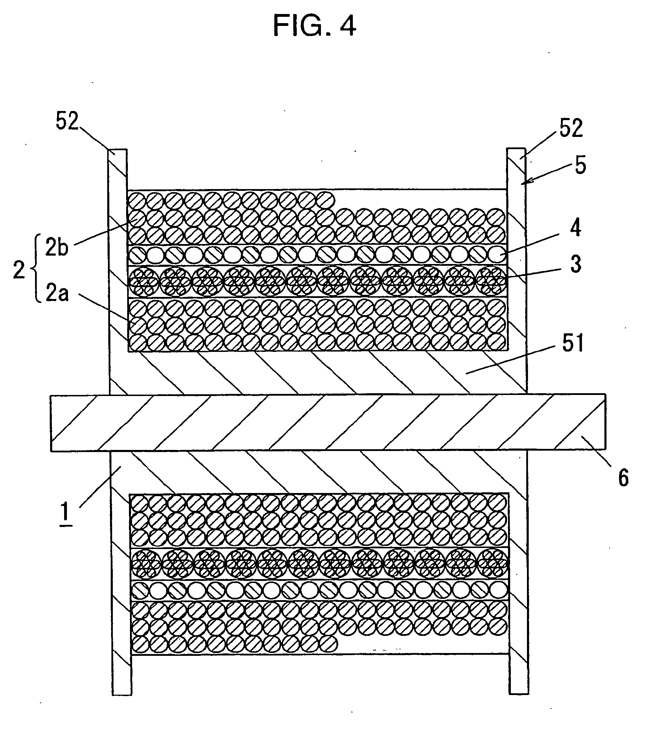

Incidentally, any or all of the windings 2 to 4 may also be formed by a litz wire obtained by twisting a plurality of strands together. Fig. 4 shows an example in which the secondary winding 3 is formed by a litz wire made out of seven strands. If this configuration is used, high-frequency loss becomes less than in the case where all the windings 2 to 4 are formed by a single wire.

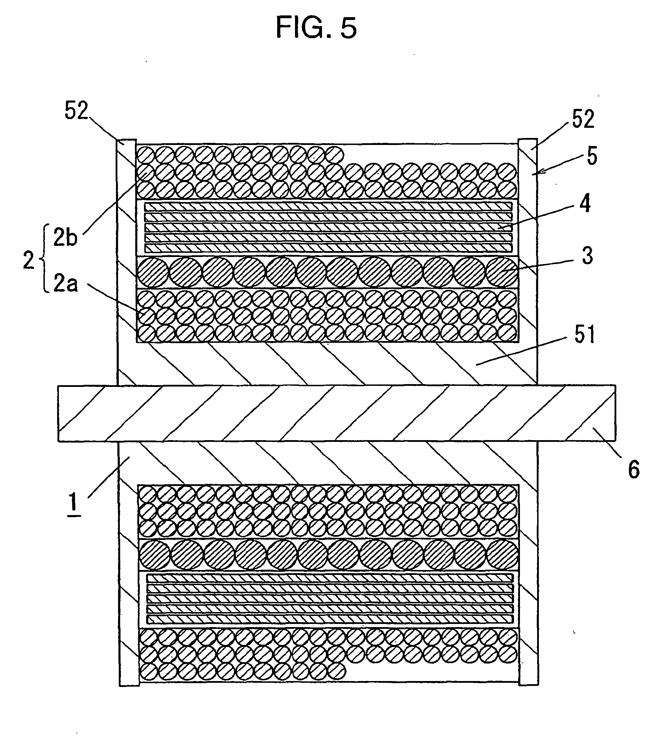

In addition, as shown in Fig. 5, the feedback winding 4 may also be made of copper foil. In the example of Fig. 5, five turns are made in the feedback winding 4. If this configuration is used, compared with the case where the feedback winding 4 is formed by a copper wire, leakage inductance and electro-magnetic noise can be further reduced.

According to an aspect of the present invention, a transformer which is used for a switching power source in a ringing-choke converter system and includes a primary winding connected via a switching element to an input side, a secondary winding connected to an output side, a feedback winding for driving the switching element connected to the primarywinding, and a bobbin that has a shaft portion made of an insulating material and having a uniform external diameter and flange portions each protruding in the radius directions of the shaft portion from both ends of the shaft portion, each winding being wound onto the shaft portion between the flange portions of the bobbin to form four separate winding layers piled in the radius directions of the shaft portion, wherein: the primary winding forms the innermost winding layer and the forth winding layer from the inside; the secondary winding forms the second winding layer from the inside; the feedback winding forms the third winding layer from the inside; and the feedback winding is wound with no clearance from the position close to one flange portion to the position close to the other flange portion.

In the transformer configured as described above, the feedback winding helps reduce leakage inductance and electro-magnetic noise. In addition, the transformer can be prevented from being larger.

According to another aspect of the present invention, in the above described transformer, the winding-start position and the winding-end position in the innermost winding layer of the primary winding are adjacent to each flange portion.

In the transformer configured like this, the feedback winding can be easily wound with no clearance.

According to still another aspect of the present invention, in the above described transformer, the number of turns in the innermost winding layer is larger than the number of turns in the forth winding layer from the inside.

In the transformer which has this configuration, compared with the case where the number of turns in the innermost winding layer is smaller than the number of turns in the forth winding layer from the inside, the mutual inductance of the primary winding and the secondary winding can be improved.

According to still another aspect of the present invention, in the above described transformer, at least one of the windings is formed by a litz wire.

In the transformer configured like this, high-frequency loss becomes less than in the case where all the windings are formed by a single wire.

According to still another aspect of the present invention, in the above described transformer, the feedback winding is made of copper foil.

In the transformer which has this configuration, compared with the case where the feedback winding is formed by a copper wire, leakage inductance and electro-magnetic noise can be further reduced.

## Claims

1. A transformer (1) which is to be used for a switching power source in a ringing-choke converter system and includes a primary winding, a secondary winding, a feedback winding for driving a switching element connected to the primary winding, and a bobbin that has a shaft portion (51) made of an insulating material and having a uniform external diameter and flange portions (52) each protruding in the radius directions of the shaft portion (51) from both ends of the shaft portion (51),
each winding being wound onto the shaft portion (51) between the flange portions (52) of the bobbin (5) to form four separate winding layers piled in the radius directions of the shaft portion (51); wherein:
the primary winding (2a, 2b) forms the innermost winding layer and the fourth winding layer from the inside:
the secondary winding (3) forms the second winding layer from the inside:
the feedback winding (4) forms the third winding layer from the inside:
**characterized in that**:
the feedback winding (4) is wound with no clearance from the position adjacent to one flange portion (52) to the position adjacent to the other flange portion (52) to reduce leakage inductance from the transformer.

2. The transformer according to claim 1. wherein in the innermost winding layer, the position where the primary winding (2a, 2b) begins being wound and the position where the primary winding (2a, 2b) finishes being wound are adjacent to each flange portion (52).

3. The transformer according to claim 2, wherein the number of turns in the innermost winding layer is larger than the number of turns in the fourth winding layer from the inside.

4. The transformer according to any one of claims 1 to 3, wherein at least one of the windings is formed by a litz wire.

5. The transformer according to claim 1 , wherein the feedback winding (4) is made of copper foil.

6. The transformer according to claim 1, wherein the feedback winding (4) is formed by two electric wires.

7. The transformer according to claim 1, wherein interlayer tapes made of an insulating material are respectively disposed between the primary winding (2a) and the secondary winding (3), and between the secondary winding (3) and the feedback winding (4), and between the feedback winding (4) and the primary winding (2b).

## Patentansprüche

1. Transformator (1), der für eine Schaltleistungsquelle in einem Sperrwandler- bzw. Ringing Choke Converter-System zu verwenden ist und eine primäre Windung, eine sekundäre Windung, eine Rückkopplungswindung zum Antreiben eines Schaltelements, das mit der primären Windung verbunden ist, und eine Spule enthält, die einen Wellenabschnitt (51), der aus einem Isoliermaterial besteht und einen gleichmäßigen externen Durchmesser aufweist, und Flanschabschnitte (52) aufweist, die jeweils in den Radiusrichtungen des Wellenabschnitts (51) von beiden Enden des Wellenabschnitts (51) vorragen,
wobei jede Windung auf den Wellenabschnitt (51) zwischen den Flanschabschnitten (52) der Spule (5) gewickelt ist, um vier separate Windungsschichten zu bilden, die in den Radiusrichtungen des Wellenabschnitts (51) gestapelt sind, wobei:
die primäre Windung (2a, 2b) die innerste Windungsschicht und die vierte Windungsschicht von innen bildet;
die sekundäre Windung (3) die zweite Windungsschicht von innen bildet;
die Rückkopplungswindung (4) die dritte Windungsschicht von innen bildet;
**dadurch gekennzeichnet, dass**:
die Rückkopplungswindung (4) ohne Zwischenraum bzw. Abstand von der Position angrenzend an bzw. benachbart zu einem Flanschabschnitt (52) zu der Position angrenzend an bzw. benachbart zu dem anderen Flanschabschnitt (52) gewickelt ist, um eine Streuinduktivität von dem Transformator zu reduzieren.

2. Transformator nach Anspruch 1, wobei in der innersten Windungsschicht die Position, wo die primäre Windung (2a, 2b) anfängt, gewickelt zu sein, und die Position, wo die primäre Windung (2a, 2b) aufhört, gewickelt zu sein, angrenzend an bzw. benachbart zu jedem Flanschabschnitt (52) sind.

3. Transformator nach Anspruch 2, wobei die Anzahl an Umdrehungen bzw. Windungen in der innersten Windungsschicht größer ist als die Anzahl an Umdrehungen bzw. Windungen in der vierten Windungsschicht von innen.

4. Transformator nach einem der Ansprüche 1 bis 3, wobei zumindest eine der Windungen durch einen Litzendraht bzw. eine Litze gebildet ist.

5. Transformator nach Anspruch 1, wobei die Rückkopplungswindung (4) aus Kupferfolie besteht.

6. Transformator nach Anspruch 1, wobei die Rückkopplungswindung (4) durch zwei elektrische Drähte gebildet ist.

7. Transformator nach Anspruch 1, wobei Zwischenschichtbänder aus einem Isoliermaterial jeweils zwischen der primären Windung (2a) und der sekundären Windung (3), und zwischen der sekundären Windung (3) und der Rückkopplungswindung (4), und zwischen der Rückkopplungswindung (4) und der primären Windung (2b) angeordnet sind.

## Revendications

1. Transformateur (1) qui doit être utilisé pour un bloc d'alimentation de commutation dans un système convertisseur de bobine de blocage d'appel et comprend un bobinage primaire, un bobinage secondaire, un bobinage de rétroaction pour entraîner un élément de commutation relié au bobinage primaire, et une bobine qui comprend une partie d'arbre (51) composée d'un matériau isolant et présentant un diamètre externe uniforme et des parties de flanc (52), chacune faisant saillie dans les directions de rayon de la partie d'arbre (51) depuis les deux extrémités de la partie d'arbre (51),
chaque bobinage étant embobiné sur la partie d'arbre (51) entre les parties de flanc (52) de la bobine (5) pour former quatre couches de bobinage séparées empilées dans les directions de rayon de la partie d'arbre (51) :
le bobinage primaire (2a, 2b) formant la couche de bobinage la plus interne et la quatrième couche de bobinage depuis l'intérieur ;
le bobinage secondaire (3) formant la deuxième couche de bobinage depuis l'intérieur ;
le bobinage de rétroaction (4) formant la troisième couche de bobinage depuis l'intérieur ;
**caractérisé en ce que** :
la couche de rétroaction (4) est embobinée sans jeu de la position adjacente à une partie de flanc (52) à la position adjacente à l'autre partie de flanc (52) afin de réduire l'inductance de fuite émise par le transformateur.

2. Transformateur selon la revendication 1, dans lequel, dans la couche de bobinage la plus interne, la position de début d'embobinage du bobinage primaire (2a, 2b) et la position de fin d'embobinage du bobinage primaire (2a, 2b) sont adjacentes à chaque partie de flanc (52).

3. Transformateur selon la revendication 2, dans lequel le nombre de spires de la couche de bobinage la plus interne est supérieur au nombre de spires de la quatrième couche de bobinage depuis l'intérieur.

4. Transformateur selon l'une quelconque des revendications 1 à 3, dans lequel au moins un des bobinages est formé par un fil toronné.

5. Transformateur selon la revendication 1, dans lequel le bobinage de rétroaction (4) est formé de feuille de cuivre.

6. Transformateur selon la revendication 1, dans lequel le bobinage de rétroaction (4) est formé de deux fils électriques.

7. Transformateur selon la revendication 1, dans lequel des bandes entre couches formées d'un matériau isolant sont respectivement disposées entre le bobinage primaire (2a) et le bobinage secondaire (3), et entre le bobinage secondaire (3) et le bobinage de rétroaction (4), et entre le bobinage de rétroaction (4) et le bobinage primaire (2b).
